(19) Europäisches Patentamt
European Patent Office
Office européen des brevets

(11) **EP 4 050 519 A1**

(12) **EUROPEAN PATENT APPLICATION**

(43) Date of publication:
**31.08.2022 Bulletin 2022/35**

(21) Application number: **21159395.9**

(22) Date of filing: **25.02.2021**

(51) International Patent Classification (IPC):
**G06N 3/04** *(2006.01)*  **G05B 13/02** *(2006.01)*
**G05B 19/418** *(2006.01)*  **G06N 3/08** *(2006.01)*
**G06N 7/00** *(2006.01)*

(52) Cooperative Patent Classification (CPC):
**G06N 3/0454; G05B 13/0265; G05B 13/027;
G05B 19/41875; G06N 3/0472; G06N 3/088;
G06N 7/005;** G05B 2219/32193; G06N 20/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Frikha, Ahmed
81549 München (DE)**
• **Gruber, Sebastian
84034 Landshut (DE)**
• **Krompaß, Denis
81549 München (DE)**
• **Köpken, Hans-Georg
91056 Erlangen (DE)**

(54) **MONITORING APPARATUS FOR QUALITY MONITORING**

(57) Monitoring apparatus and method for quality monitoring of a supplemented manufacturing process to a set of predefined manufacturing processes of industrial manufacturing, comprising at least one processor configured to perform the steps:
- obtaining (S1) more than one teacher models, wherein each teacher model is a learning model trained to monitor one of the predefined manufacturing processes,
- providing (S2) an initial version of a student learning model and an initial version of a generator learning model,
- for each of the teacher models, training (S11) the generator learning model and a teacher specific student model to create data samples where the teacher model and teacher specific student learning models do not agree in their predictions, and adapting the current version of the student learning model based all trained teacher specific student models,
- customizing (S9) the adapted student model to the supplemented manufacturing process by training the adapted student model with annotated data of the supplemented manufacturing process, and
- monitoring (S10) the supplemented manufacturing process by processing the customized student model using data samples collected during the supplemented manufacturing process as input data.

FIG 2

**Description**

The present disclosure relates to a Monitoring apparatus and a method for localizing errors in a monitored technical system consisting of devices and/or transmission lines.

Nowadays, in industrial manufacturing operation monitoring and quality monitoring are performed by data-driven applications, like anomaly detection, based on machine learning models. There exists a high diversity of manufacturing scenarios, e.g. different machine types, numerical programs (NC), manufacturing processes and production sites to name a few. Furthermore, the product portfolio of most manufacturers is constantly changing, and so is the recorded data during the product manufacturing. This creates a so called cold-start situation, i.e., each time a new manufacturing scenario, e.g., new machine, product or manufacturing process, is encountered, all data driven applications that are related to this scenario have to be developed from scratch. More precisely, a big amount of data must be collected, e.g. by recording sensor data during manufacturing, which then has to be annotated by scarce and costly domain experts. Only then a data-driven application can be developed, e.g., an anomaly detector for this specific manufacturing scenario or a classifier for the produced workpieces or detected anomalies to name some examples. Finally, a machine learning model is trained with the annotated data. If the desired performance is not reached, more data has to be collected and annotated. Labelling or labelled data is used as synonym for annotating or annotated data in this description.

Leveraging the data and therefore knowledge from different previous manufacturing situations would facilitate to develop a model that can quickly adapt to new unseen scenarios.

EP 3705962 A1 discloses a method that leverages data from different anomaly detection tasks to perform quick adaptation to newly encountered tasks. Data recorded while performing, e.g., other milling processes is used to train a highly adaptive model. So, if data from several manufacturing scenarios would be available, a model could be trained that is highly adaptable to a variety of unseen manufacturing scenarios. This would relax the cold-start situation and, hence, accelerate the development of data-driven applications.

On the other hand, data owners, e.g. manufacturers, do not or only to a small extend share their data collected in a manufacturing process in order to preserve data-privacy and know-how. This makes the application of methods as disclosed in EP 3705962 A1 impossible, since they rely on having data from different tasks, e.g. manufacturing processes and scenarios. The shared subset of data does not necessarily describe the whole data distribution underlying the manufacturing.

Therefore, it is the object of the present application to provide a monitoring apparatus and method which accelerates the provision of data-driven applications and leverages the knowledge contained in data from different previous manufacturing situations without accessing this data itself and therefore preserving data-privacy.

This object is solved by the features of the independent claims. The dependent claims contain further developments of the invention.

A first aspect concerns a monitoring apparatus for quality monitoring a supplemented manufacturing process to a set of predefined manufacturing processes of industrial manufacturing, comprising at least one processor configured to perform the steps:

- obtaining more than one teacher models, wherein each teacher model is a learning model trained to monitor one of the predefined manufacturing processes,
- providing an initial student learning model and an initial generator learning model,

for each teacher model,

a) copying a teacher specific student model from the initial student learning model or an adapted student learning model,
b) adapting the teacher specific student model by minimizing a first error between an output data of the teacher specific student model and an output data of the teacher model, wherein the output data of the teacher specific student model and the output of the teacher model are processed with adaptation data samples created by the initial or an adapted generator learning model as input,
c) computing a second error between a first output data of the adapted teacher specific student model and a second output data of the teacher model, wherein the first output data of the adapted teacher specific student model and the second output of the teacher model are processed with evaluation data samples generated by the initial or an adapted generator model as input data,
d) adapting the generator learning model by maximizing a statistical divergence between the first output data and the second output data,
e) adapting the student learning model based on the second errors of all adapted teacher specific student models, and repeating steps a) to e) until the adapted student model reaches a predefined quality value,

- customizing the adapted student model to the supplemented manufacturing process by training the adapted student model with annotated data of the supplemented manufacturing process, and
- monitoring the supplemented manufacturing process by processing the customized student model using data samples collected during the supplemented manufacturing process as input data.

The monitoring apparatus generates the customized student model for quality monitoring the supplemented manufacturing process without any access to data of the set of predefined manufacturing processes. Instead, it only requires a set of learning models, i.e. the teacher models, which are already trained to monitor the predefined manufacturing processes. The knowledge from each of these teacher models is transferred and merged into the single learning model, which is the adapted student model.

This is not only achieved by iteratively adapting each teacher specific student based on the respective teacher model using adaptation data samples generated by a generator learning model, but especially by adapting the generator learning model itself. The adapted generator learning model creates data samples where the output data, i.e. the probability distributions over the classes of the teacher specific student learning model and the considered teacher learning model are most different. The student learning model is then trained on the data samples generated by all the generator learning models for all the teacher learning models to learn to match the teachers' learning model output probability distributions over the classes.

The adapted student learning model already provides a high performance in monitoring not only the predefined manufacturing processes but also in monitoring the supplemented manufacturing process. The adapted student model can be easily customized to new tasks, i.e. supplemented manufacturing processes, using only few data samples from the new tasks.

According to an embodiment the monitoring apparatus is configured such that the adapting of the student learning model is provided by minimizing the sum of all second errors.

According to an embodiment the monitoring apparatus is configured such that the minimizing of errors is performed by a stochastic gradient descent update rule.

The stochastic gradient descent update rule ensures a high adaptivity of the student learning model. The stochastic gradient descent update rule is a bi-level optimization scheme for fast adaptation of Deep Networks

According to a further embodiment the monitoring apparatus is configured such that the statistical divergence is a Kullback-Leibler divergence.

According to a further embodiment the monitoring apparatus is configured such that one common generator learning model is applied for all teacher models.

The monitoring apparatus using only one common generator learning model requires less processing and storing capabilities. Thus, a higher number of teacher learning models, and different predefined manufacturing processes respectively can be applied for training the adapted student mode. On the other hand, the monitoring apparatus can be of moderate processing performance.

According to a further embodiment the monitoring apparatus is configured such that the common generator learning model obtains for each of the teacher learning models information on the teacher learning model which it is applied for.

This has the advantage that the generator can produce different data samples for each teacher model. This leads to a higher quality of the generated data and therefore to a higher performance of the student model.

According to an alternative embodiment the monitoring apparatus is configured such that a separate generator learning model is provided for each teacher learning model.

The separate generator learning model learns to generate data samples similar to the data that the corresponding teacher model was trained with. This can lead to a higher quality of the generated data, especially in the case where the teacher where trained on distant data distributions, e.g. manufacturing processes from different industries. The higher quality of the generated data leads to a higher performance of the student learning model.

According to a further embodiment the monitoring apparatus is configured such that the set of teacher learning models comprises teacher learning models of different learning model architectures.

This provides the monitoring apparatus with a high flexibility in teacher learning models being used for adapting the student learning model.

According to a further embodiment the monitoring apparatus is configured such that for each of the teacher learning models, the input data has the same size, and the output data has the same number of classes.

In the case of image data being used as input data for the teacher learning models the image size, i.e. the number of pixels per image has to be the same for each teacher learning model. When the input data are multivariate timeseries of different sensor data, measuring process parameters, e.g. a drilling cycle, torque and temperature of a drilling tool, the size of the input data is the number of parameters represented by the sensor data. Output data of the learning model is a probability distribution for one or more classes the input is classified to. A teacher learning model for anomaly detection of a process having e.g. three different operation modes provides output data of 3 classes.

According to a further embodiment the monitoring apparatus is configured such that the collected data of the supplemented manufacturing process contain the same features as the data of the set of predefined manufacturing processes used to train the teacher learning models.

According to a further embodiment the monitoring apparatus is configured such that customizing is performed by a stochastic gradient descent update rule.

This allows a consistent processing of adapting the student learning models and the customized student learning model. Customizing can be performed several times with the same or different annotated data samples collected during the supplemented manufacturing process.

According to a further embodiment the monitoring apparatus is configured such that the learning model is a neural network, especially a deep neural network.

According to a further embodiment the monitoring apparatus is configured such that the manufacturing processes are milling processes and the data of the supplemented manufacturing process are sensor data representing the milling process, especially a torques of the various axes in a milling machine, control deviations of the torque, image data of the milled workpiece.

A second aspect concerns a method for quality monitoring of a supplemented manufacturing process to a set of predefined manufacturing processes of industrial manufacturing, comprising the steps:

- obtaining more than one teacher models, wherein each teacher model is a learning model trained to monitor one of the predefined manufacturing processes,
- providing an initial version of a student learning model and an initial version of a generator learning model,

for each teacher model,

a) copying a teacher specific student model from the current version of the student learning model,
b) adapting the teacher specific student model by minimizing a first error between an output data of the teacher specific student model and an output data of the teacher model, wherein the output data of the teacher specific student model and the output of the teacher model are processed with adaptation data samples created by the current version of the generator learning model as input,
c) computing a second error between a first output data of the adapted teacher specific student model and a second output data of the teacher model, wherein the first output data of the adapted teacher specific student model and the second output of the teacher model are processed with evaluation data samples created by the current version of the generator model as input data,
d) adapting the current version of the generator learning model by maximizing a statistical divergence between the first output data and the second output data,
e) adapting the current version of the student learning model based on the second errors of all adapted teacher specific student models, and

repeating steps a) to e) until the adapted student model reaches a predefined quality value,

- customizing the adapted student model to the supplemented manufacturing process by training the adapted student model with annotated data of the supplemented manufacturing process, and
- monitoring the supplemented manufacturing process by processing the customized student model using data samples collected during the supplemented manufacturing process as input data.

Further embodiments of the method provide steps as performed by the monitoring apparatus.

A third aspect concerns a computer program product directly loadable into the internal memory of a digital computer, comprising software code portions for performing the steps as described before, when said product is run on said digital computer.

Concluding in a condensed form, the method and monitoring apparatus for quality monitoring of a supplemented manufacturing process to a set of predefined manufacturing processes of industrial manufacturing, comprising at least one processor configured to perform the steps:

- obtaining (S1) more than one teacher models, wherein each teacher model is a learning model trained to monitor one of the predefined manufacturing processes,
- providing (S2) an initial version of a student learning model and an initial version of a generator learning model,
- for each of the teacher models, training (S11) the generator learning model and a teacher specific student model to create data samples where the teacher model and teacher specific student learning models do not agree in their predictions, and adapting the current version of the student learning model based all trained teacher specific student models,

- customizing (S9) the adapted student model to the supplemented manufacturing process by training the adapted student model with annotated data of the supplemented manufacturing process, and
- monitoring (S10) the supplemented manufacturing process by processing the customized student model using data samples collected during the supplemented manufacturing process as input data.

The invention will be explained in more detail by reference to accompanying figures. Similar objects will be marked by the same reference signs.

Figure 1    schematically illustrates an embodiment of the inventive monitoring apparatus; and

Figure 2    illustrates an embodiment of the inventive method by a flow diagram.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g. processor, firmware or by software, and/or by a combination of dedicated hardware and firmware and software. It is further noted that each functional unit described for an apparatus can perform a functional step of the related method.

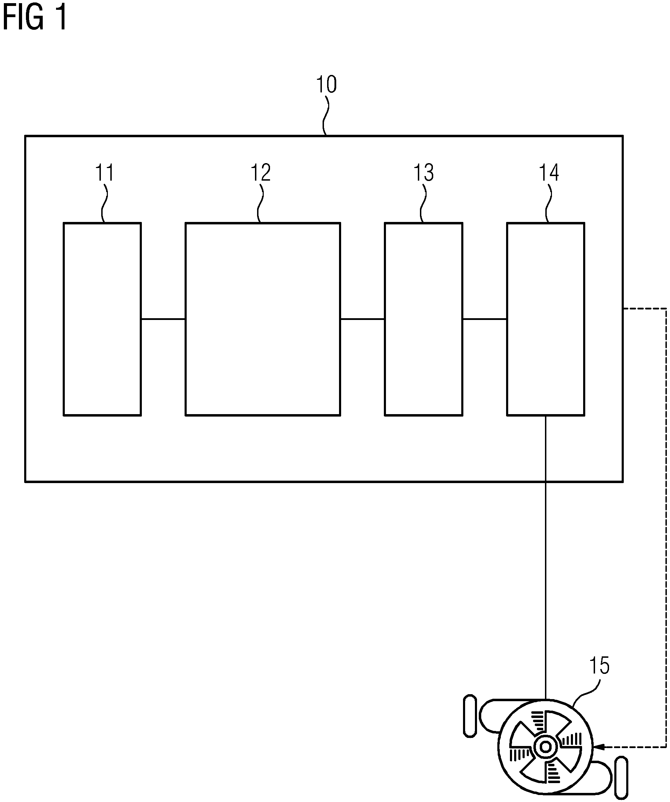

Figure 1 shows a monitoring apparatus 10 consisting of one or several processors. The monitoring apparatus 10 is structured into functional units performing a quality monitoring.

Quality monitoring means providing, e.g., an anomaly detection of a monitored manufacturing process or classifying the quality of a monitored manufactured product. The anomaly detection or classification is provided by inputting data collected by various sensors during the manufacturing process into a learning model which is specifically trained for the monitored process with. Learning models are especially applied in industrial manufacturing, e.g., in an automation plant.

The monitoring apparatus 10 comprises a provisioning unit 11 obtaining a set of more than one teacher models. Each teacher model is a learning model trained to monitor one of a set of predefined manufacturing process. The learning model is an artificial neural network, especially a deep neural network, with multiple layers between the input and output layers.

The set of teacher learning models may comprise teacher learning models of the same learning model architecture, but also of different learning model architectures. Input data of each of the predefined teacher learning models has the same size. The output data of each of the predefined teacher learning models has the same number of classes. Input data may be structured as a vector. In this case, the size of the input data is the dimension of the vector, each dimension comprises e.g., a data point measured by one of several sensors in a manufacturing process. The set of predefined manufacturing process are similar manufacturing processes performed by a different machine types or controlled by different numerical programs (NC) or manufacturing processes running at different production sites. The provision unit does not provide any data of these predefined manufacturing processes.

The monitoring apparatus 10 comprises a student training unit 12 which trains a highly adaptive student learning model based on the obtained teacher models of the set of predefined manufacturing processes. To perform this without access to data of the predefined manufacturing processes, the monitoring unit 12 is configured to train two learning models, a generator learning model and a student learning model. For each teacher model, the generator learning model creates data samples where that teacher model and the student learning model "do not agree" in their predictions. More precisely, it generates data samples where the output probability distributions over the classes of the student learning model and the considered teacher model are most different.

The student learning model is then trained on the samples generated by all the generator learning models for all the teacher models to learn to match the teacher models' output probability distributions over the classes. To ensure the high adaptivity of the student learning model, this training is performed using the bi-level optimization scheme of a meta-learning, particularly a Model-Agnostic Meta-Learning (MAML) algorithm of Finn et. al, (https://arxiv.org/abs/1703.03400), especially by applying a stochastic gradient descent update rule.

The student learning model is iteratively adapted based on teacher specific student models for each of the set of teacher models until the adapted student learning model reaches a predefined quality value.

The monitoring apparatus 10 comprises a customization unit 13. The customization unit 13 is configured to training the adapted student model with annotated data of a supplemented manufacturing process. It outputs a customized student learning model. The supplemented manufacturing process is monitored by the same or similar sensor data or image data as the predefined manufacturing processes. The amount of annotated data is low compared to training data required to train a student learning model with randomly initialized parameters.

The monitoring apparatus 10 comprises a monitoring unit 14 configured such to monitor the supplemented manufacturing process by processing the customized student learning model using data samples collected during the supplemented manufacturing process as input data. The manufacturing processes are e.g., milling processes and the data of the supplemented manufacturing process are sensor data representing the milling process, especially a torques of the various axes in a milling machine 15, control deviations of the torque, image data of the milled workpiece. Findings by evaluating the anomaly detection results provided by the monitoring unit 14 can be used to change the settings of the monitored process, in the depicted embodiment, the milling machine 15.

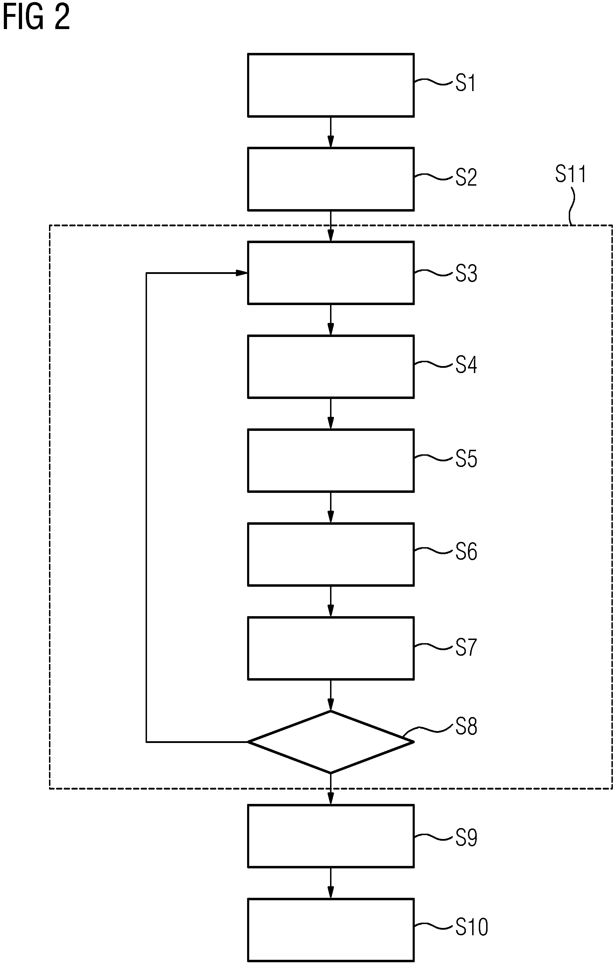

Figure 2 shows the monitoring method in more detail. In a first step S1, more than one teacher models are obtained, wherein each teacher model is a learning model trained to monitor one of the predefined manufacturing processes.

In the next step S2 an initial version of a student learning model and an initial version of a generator learning model are established. The generator learning model can be provided by one common generator learning model being applied for all teacher models. Optionally, the common generator learning model obtains additional information about the teacher learning model for which the generator learning model generates adaptation data samples and evaluation data samples. Alternatively, a separate generator learning model is provided for each teacher learning model.

Subsequently explained steps S3 to S8 are performed one are more likely several times for each teacher model. In step S3 a copy of a teacher specific student model is made from the current version of the student learning model. In the first iteration of the adaptation process S11, the current version of the student learning model or the current version of the generator learning model is the initial version of the respective student or generator learning model, in subsequent step the current version is the adapted student or generator learning model.

Then, the teacher specific student model is adapted by minimizing a first error between an output data of the teacher specific student model and an output data of the teacher model, wherein the output data of the teacher specific student model and the output of the teacher model are processed with adaptation data samples created by the current version of the generator learning model as input, see step 4.

In step S5 a second error is computed between a first output data of the adapted teacher specific student model and a second output data of the teacher model. The first output data of the adapted teacher specific student model and the second output of the teacher model are processed with evaluation data samples created by the current version of the generator learning model as input data.

In step S6, the current version of the generator learning model is adapted by maximizing a statistical divergence between the first output data and the second output data. Preferably, the statistical divergence is a Kullback-Leibler divergence.

The current version of the student learning model is adapted based on the second errors of all adapted teacher specific student models. Steps S3 to S8 are repeated until the adapted student model reaches a predefined quality value. The resulting version of the adapted student learning model is further called final version of the adapted student learning model.

The output data of the learning models is a prediction distribution provided for the input data, i.e. here the data samples generated by the generator learning model. The error is more precisely a loss function, e.g., a cross entropy. Minimizing of errors is preferably performed by a stochastic gradient descent update rule.

Before the final version of the adapted student learning model can be applied for monitoring, it has to be customized to the supplemented manufacturing process by training the final version of the adapted student model with annotated data of the supplemented manufacturing process, see step S9.

Finally, the customized student learning model is applied for monitoring the supplemented manufacturing process. Data samples collected during the supplemented manufacturing process are fed as input data into the customized student model providing a classification, e.g., that the monitored process is running in normal mode.

The steps of the adaptation process S11, are illustrated in pseudo code below. Here a scenario is considered where each different manufacturing condition is a different manufacturing process P:

1. Require $m$ teacher models trained on $m$ different processes

2. Randomly initialize the student model parameters $\theta$

3. Randomly initialize the generator model parameters $\omega$

4. **while** not converged

5.     sample a batch of $n$ teachers $\varphi_i$ from the $m$ total teachers

6.       **for** each $\varphi_i$ **do:**

7.           Make a copy on the current student initialization $\theta_i = \theta$

8.           Generate $D_i$ and $D_i'$, sets of data for the adaptation and evaluation

              updates respectively, by using the generator $\omega$.

9.           Compute the error of the student model $\theta_i$

              on the set of examples generated for adaptation $D_i$.

10.          Update the student model parameters $\theta_i$ to $\theta_i'$ using a

              stochastic gradient descent update rule to minimize its

              error.

11.          Feed the adaptation generated examples $D_i$ through the adapted

              student model $\theta_i'$ and the teacher model to get their predic-

              tion

              distributions over the classes $S_i$ and $T_i$, respectively.

12.          Update the generator model parameters $\omega$ using a stochastic

              gradient descent update rule to maximize the Kullback-

              Leibler divergence between $S_i$ and $T_i$.

13.          Compute the error $L_i$ of the adapted student model $\theta_i'$ with

              respect to $\theta$

              on the set of examples generated for evaluation $D_i'$

          **end for**

14.      Update the student model parameters θ to minimize the sum of

          the errors $L_i$, computed in step 13, using a stochastic

          descent update rule

15. end while

To customize, see step S9, the final version of the student learning model to a new manufacturing process Pi, the operations 9 and 10 are performed from the inner training loop of the meta-training algorithm S11. The customization step 9 is illustrated in pseudo code below:

1. Preprocess the data of the new process Pi.
2. Initialize the student model with the parameters θ found during model training.
3. Sample few training examples for adaptation from the new process Pi.
4. Compute the error of the student model θ on the sampled examples.

5. Update the student model parameters θ to $\theta_i'$ using a stochastic gradient descent update rule to minimize its error.

Customizing can be performed several times with the same or different sensor data samples collected during the supplemented manufacturing process.
The monitoring step 10 is illustrated in pseudo code below:

6. Preprocess the live data from the new process Pi.

7. Initialize the classifier model with the process-specific parameters $\theta_i'$ found during model adaptation (algorithm above).

8. Predict class probabilities for the live data with the model $\theta_i'$.

Such a method would enable training a high adaptive learning model, while preserving the data-privacy of the customers.
It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Monitoring apparatus for quality monitoring of a supplemented manufacturing process to a set of predefined manufacturing processes of industrial manufacturing, comprising at least one processor configured to perform the steps:

   - obtaining more than one teacher models, wherein each teacher model is a learning model trained to monitor one of the predefined manufacturing processes,
   - providing an initial version of a student learning model and an initial version of a generator learning model,

   for each teacher model,

   a) copying a teacher specific student model from the current version of the student learning model,
   b) adapting the teacher specific student model by minimizing a first error between an output data of the teacher specific student model and an output data of the teacher model, wherein the output data of the teacher specific student model and the output of the teacher model are processed with adaptation data samples created by the current version of the generator learning model as input,
   c) computing a second error between a first output data of the adapted teacher specific student model and a second output data of the teacher model, wherein the first output data of the adapted teacher specific student model and the second output of the teacher model are processed with evaluation data samples created by the current version of the generator learning model as input data,
   d) adapting the current version of the generator learning model by maximizing a statistical divergence between the first output data and the second output data,
   e) adapting the current version of the student learning model based on the second errors of all adapted teacher specific student models, and

   repeating steps a) to e) until the adapted student learning model reaches a predefined quality value,

   - customizing the adapted student learning model to the supplemented manufacturing process by training the adapted student model with annotated data of the supplemented manufacturing process, and
   - monitoring the supplemented manufacturing process by processing the customized student model using data samples collected during the supplemented manufacturing process as input data.

2. Monitoring apparatus according to claim 1, wherein the adapting of the student learning model is provided by minimizing the sum of all second errors.

3. Monitoring apparatus according to any of the preceding claims, wherein minimizing of errors is performed by a stochastic gradient descent update rule.

4.  Monitoring apparatus according to any of the preceding claims, wherein the statistical divergence is a Kullback-Leibler divergence.

5.  Monitoring apparatus according to any of the preceding claims, wherein one common generator learning model is applied for all teacher models.

6.  Monitoring apparatus according to claim 5, wherein the common generator learning model obtains for each of the teacher learning models information on the teacher learning model which it is applied for.

7.  Monitoring apparatus according to any of claims 1 to 4, wherein a separate generator learning model is provided for each teacher learning model.

8.  Monitoring apparatus according to any of the preceding claims, wherein the set of teacher learning models comprises teacher learning models of different learning model architectures.

9.  Monitoring apparatus according to any of the preceding claims, wherein for each of the predefined teacher learning models, the input data has the same size, the output data has the same number of classes.

10. Monitoring apparatus according to any of the preceding claims, wherein the collected data of the supplemented manufacturing process contain the same features as the data of the set of predefined manufacturing processes used to train the teacher learning models.

11. Monitoring apparatus according to any of the preceding claims, wherein customizing is performed by a stochastic gradient descent update rule.

12. Monitoring apparatus according to any of the preceding claims, wherein the learning model is a neural network, especially a deep neural network.

13. Monitoring apparatus according to any of the preceding claims, wherein the manufacturing processes are milling processes and the data of the supplemented manufacturing process are sensor data representing the milling process, especially a torques of the various axes in a milling machine, control deviations of the torque, image data of the milled workpiece.

14. Method for quality monitoring of a supplemented manufacturing process to a set of predefined manufacturing processes of industrial manufacturing, comprising the steps:

    - obtaining (S1) more than one teacher models, wherein each teacher model is a learning model trained to monitor one of the predefined manufacturing processes,
    - providing (S2) an initial version of a student learning model and an initial version of a generator learning model,

    for each teacher model,

    a) copying (S3) a teacher specific student model from the current version of the student learning model,
    b) adapting (S4) the teacher specific student model by minimizing a first error between an output data of the teacher specific student model and an output data of the teacher model, wherein the output data of the teacher specific student model and the output of the teacher model are processed with adaptation data samples created by the current version of the generator learning model as input,
    c) computing (S5) a second error between a first output data of the adapted teacher specific student model and a second output data of the teacher model, wherein the first output data of the adapted teacher specific student model and the second output of the teacher model are processed with evaluation data samples created by the current version of the generator learning model as input data,
    d) adapting the current version of the generator learning model (S6) by maximizing a statistical divergence between the first output data and the second output data,
    e) adapting the current version of the student learning model (S7) based on the second errors of all adapted teacher specific student models, and

    repeating (S8) steps a) to e) until the adapted student model reaches a predefined quality value,

- customizing (S9) the adapted student model to the supplemented manufacturing process by training the adapted student model with annotated data of the supplemented manufacturing process, and
- monitoring (S10) the supplemented manufacturing process by processing the customized student model using data samples collected during the supplemented manufacturing process as input data.

15. A computer program product directly loadable into the internal memory of a digital computer, comprising software code portions for performing the steps of claim 14 when said product is run on said digital computer.

FIG 1

FIG 2

Europäisches
Patentamt
European
Patent Office
Office européen
des brevets

# EUROPEAN SEARCH REPORT

Application Number

EP 21 15 9395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUISHAN LIU ET AL: "Teacher-Student Compression with Generative Adversarial Networks", ARXIV.ORG, CORNELL UNIVERSITY LIBRARY, 201 OLIN LIBRARY CORNELL UNIVERSITY ITHACA, NY 14853, 6 December 2018 (2018-12-06), XP081626064, * page 1 - page 7 * ----- | 1-15 | INV. G06N3/04 G05B13/02 G05B19/418 G06N3/08 G06N7/00 |

TECHNICAL FIELDS
SEARCHED (IPC)

G06N
G05B

The present search report has been drawn up for all claims

| Place of search | Date of completion of the search | Examiner |
|---|---|---|
| The Hague | 14 July 2021 | Falco, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3705962 A1